Europäisches Patentamt

European Patent Office

Office européen des brevets

(11) Publication number: **0 124 995**
**B1**

# EUROPEAN PATENT SPECIFICATION

(45) Date of publication of patent specification: **10.09.86**

(51) Int. Cl.⁴: **B 62 D 1/18, F 16 F 7/12**

(21) Application number: **84302164.3**

(22) Date of filing: **29.03.84**

(54) **Energy-absorbing steering column for a vehicle.**

(30) Priority: **09.05.83 US 492606**

(43) Date of publication of application:
**14.11.84 Bulletin 84/46**

(45) Publication of the grant of the patent:
**10.09.86 Bulletin 86/37**

(84) Designated Contracting States:
**DE FR GB IT**

(56) References cited:
**FR-A-1 543 222**
**FR-A-1 549 884**
**FR-A-2 010 302**
**FR-A-2 193 376**
**GB-A-1 206 388**
**US-A-3 590 655**
**US-A-3 748 922**
**US-A-3 788 148**
**US-A-4 006 647**

(73) Proprietor: **GENERAL MOTORS CORPORATION
General Motors Building 3044 West Grand
Boulevard
Detroit Michigan 48202 (US)**

(72) Inventor: **Oakes, Edmond G.
8750 Verne Road
St. Charles Michigan, 48655 (US)**
Inventor: **Arndt, Frederick Paul
1945 Seminole Lane
Saginaw Michigan 48603 (US)**
Inventor: **Grandel, Leonard Frank
3895 Boeing Drive
Saginaw Michigan, 48604 (US)**

(74) Representative: **Breakwell, John Neil Bower
et al
GM Patent Section Luton Office (F6) P.O. Box
No. 3 Kimpton Road
Luton Beds. LU2 OSY (GB)**

Courier Press, Leamington Spa, England.

## Description

This invention relates to an energy-absorbing steering column assembly for a vehicle, as specified in the preamble of claim 1, for example as disclosed in US—A—3,788,148.

The present invention is concerned with the provision of effective energy absorption for a wide range of load conditions from low loads to high loads.

For this purpose an energy-absorbing steering column assembly in accordance with the present invention is characterised by the features specified in the characterising portion of claim 1.

In a preferred embodiment of an energy-absorbing steering column assembly in accordance with the present invention, a deforming ball unit is operatively interposed between the upper and lower cylindrical metallic mast jackets of a telescopically collapsible steering column. The deforming ball unit comprises a cylindrical polyamide (nylon) carrier sleeve in which upper and lower annularly arranged sets of steel balls are rotatably mounted. These balls contact and have an interference fit with the outer wall of the lower mast jacket and the inner wall of the upper mast jacket. When the mast jackets and the deforming ball unit are initially assembled together, the balls may form initial tracks or grooves of predetermined lengths in the walls of either or both of the mast jackets. When the assembly is installed in a vehicle and when the magnitude of a steering column impact load causes telescopic movement of the upper mast jacket relative to the lower mast jacket, the deforming balls linearly extend the tracks by working and displacing the metal of the upper and lower mast jackets as the steering column is telescopically collapsed. With the balls working the metal to extend the tracks, the energy of a given load is effectively dissipated at a constant rate until column collapse is terminated. To increase energy absorption capability and to tailor this column so that it provides greater operator protection for larger loads, the upper and lower mast jackets are formed with ramps (ramp sections) which the balls encounter while forming linear grooves or tracks therein.

As the balls encounter the ramps, more material is worked as the balls plough their tracks, so that energy absorption is increased as the column is stroked.

With the present invention, ramps are coined in or otherwise provided on the walls of the upper and lower mast jackets at the opposite ends of the ball unit, respectively coacting with the upper and lower ball sets to provide additional stages of energy absorption within a prescribed length of telescopic collapse. Thus after both ball sets forcibly track the cylindrical wall portions of the upper and lower mast jackets in a first stage of energy absorption, column loading may be such that the upper ball sets engage upper ramps in the upper mast jacket for a second stage of energy absorption. In this second stage, energy is absorbed at a progressively increasing rate while the column telescopically collapses. If the load is such that telescoping continues, the lower ball set reaches the lower ramp section in the lower mast jacket so that energy is absorbed at a third and higher rate in the third stage of energy absorption.

If it is desired to have the upper and lower ball sets engage their associated ramps at the same time, they can be spaced from the associated ball sets so that they are encountered simultaneously. Additionally, energy absorption can be tailored by varying ramp angle or by varying the hardness or material of the ramps.

This invention thus makes available a new and improved energy-absorbing steering column assembly in which deforming balls track the walls of upper and lower mast jackets telescoping under impact loads to effectively absorb the energy of: light loads in a first discrete stage of operation; intermediate loads in a second discrete stage of operation; and high loads in a third discrete stage of operation.

It is thereby possible to achieve improved energy-absorption capability for any given load and for any length of column collapse, especially with the use of telescopic upper and lower mast jackets in which deforming ball members co-operate with ramp members of the mast jackets to provide multiple levels of energy absorption matched with column loads over a foreshortened amount of telescopic collapse.

In the drawing:

Figure 1 is an elevational view of an automotive vehicle body partially broken away to show an energy-absorbing steering column assembly in accordance with the present invention operatively mounted therein;

Figure 2 is a fragmentary enlarged view, with some parts in section, of the steering column, generally on the line 2—2 of Figure 1;

Figure 3 is an enlarged cross-sectional view, generally on the line 3—3 of Figure 2; and

Figure 4 is a graph illustrating operation of the steering column of Figures 1 to 3 when stroked on the application of a predetermined load thereto.

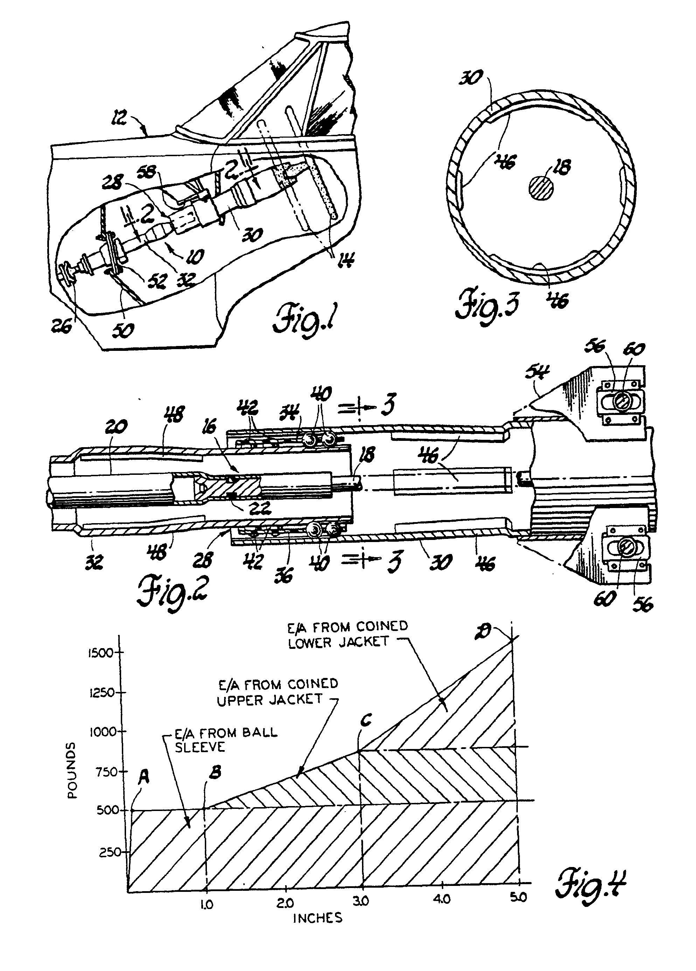

With reference now to the drawing, Figure 1 illustrates an energy-absorbing steering column assembly 10 operatively mounted within an automotive vehicle 12 having a hand wheel (steering wheel) 14 which can be manually operated by a vehicle operator for effecting steering movement of the usual dirigible road wheels (not shown) of the vehicle. The hand wheel 14 is mounted to the upper end of a steering shaft assembly 16 which includes an upper shaft 18 mounted for telescopic movement in a tubular lower shaft 20. The upper and lower shafts have conventional mating flats, not shown, so that the two shafts turn together as an assembly when the steering wheel is turned. The upper and lower steering shafts are held in an extended position by break-away plastics connectors 22 which shear on the application of a predetermined load to the steering shaft assembly, to allow telescopic collapse of these

parts. The lower end of the lower steering shaft is connected by way of a conventional flexible coupling 26 to a steering gear (not shown), which in turn is drivingly connected to the dirigible wheels of the vehicle by way of conventional steering gear linkage (also not shown).

In addition to the steering shaft assembly 16, the steering column assembly 10 includes a mast jacket assembly 28 comprising interfitting upper and lower tubular mast jackets 30 and 32 of steel which have different diameters to telescope together under a wide range of impact loads. As is shown in Figure 2, the upper end portion of the lower mast jacket 32 slidably fits into the lower end portion of the upper mast jacket 30. Interposed between these end portions is a deforming ball and sleeve assembly 34. This assembly comprises a tubular sleeve 36 of polyamide (nylon) or other suitable material in which upper and lower sets 40 and 42 of identical steel balls are rotatably mounted. These balls have a diameter slightly greater than the normal diametral clearance between the end portions of the upper and lower mast jackets 30 and 32, so that during assembly only short linear tracks are initially formed in the inner surface of the upper mast jacket 30 and in the outer surface of the lower mast jacket 32 as the parts are initially assembled together into the Figure 1 arrangement.

The upper mast jacket 30 has an annular series of identical ramps 46 which are coined or otherwise provided therein and which are axially aligned with and spaced a predetermined distance from the upper ball sets 40. With such construction, the balls of the ball sets 40 continue the linear tracks and deform metal of the mast jackets and thereby dissipate energy at a predetermined level before the ramps 46 are reached by the ball sets 40. As will be further described, under some high-load impacts the balls of the ball sets 40 can displace ramp metal when tracking so that the rate of energy absorption is increased as the jackets are further telescoped together. The lower mast jacket 32 is similarly provided with arcuately spaced and aligned ramps 48 which serve to increase the rate of energy absorption as the lower ball sets 42 roll tracks therein as the column telescopically collapses (strokes) towards its maximum stroke.

As is best seen in Figure 1, the lower mast jacket 32 is mounted to a front bulkhead 50 of the vehicle 12 by a conventional bracket construction 52. The upper mast jacket 30 has a bracket 54 welded or otherwise affixed thereto which carries break-away release capsules (connectors) 56. These capsules 56 are attached to the lower portion of an instrument panel 58 of the vehicle by bolts 60, as described in US—A—3,392,599.

On the application to the steering wheel 14 of a load directed generally axially of the column and exceeding a predetermined load, the capsules 56 break away and thereby release the upper portion of the column, which begins telescopic collapse movement relative to the lower portion of the column. As initial telescopic movement occurs, the upper and lower ball sets 40 and 42 cold-roll and work the metal of the upper and lower mast jackets 30 and 32 to form linear grooves or tracks therein to dissipate energy. This action is illustrated by segment A—B forming stage 1 of the absorption curve of Figure 4. A constant 226.8 kg (500 pound) load occurs during the first 25.4 mm (one inch) travel, as shown in the graph. During this 25.4 mm (one inch) travel the ball sleeve 36 travels approximately 12.7 mm (one-half inch). At 25.4 mm (one inch) travel as shown, the column load increases from 226.8 kg (500 pounds) as the upper ball ramps 46 are encountered by the upper ball sets 40 and further telescopic collapse of the steering column assembly occurs. Energy absorption (E/A) is progressively increased as the upper ball set 40 cold-rolls the ball tracks into the ramps 46, as illustrated by segment B—C forming stage 2 of the energy-absorbing curve. If additional energy-absorption is required at 76.2 mm (three inches), the lower mast jacket ball ramps 48 are encountered by the lower ball sets 42. When this occurs, the lower ball sets 42 cold-work the material of the lower jacket ramps 48 and form tracks therein as the absorption of the column is progessively increased, as shown by segment C—D forming stage 3 of the Figure 4 curve as the column telescopically collapses to its full 127 mm (five inch) stroke, corresponding to a load of 680.4 kg (1500 pounds).

From the above, it will be evident that both the upper and lower ball sets 40 and 42 co-operate with the respective ramps 46 and 48 to provide for progressively increasing energy-absorbing capability, so that this steering column assembly provides tailored energy absorption for a wide range of loads ranging from light loads to heavy loads, and can thereby provide effective potential protection for vehicle operators of various body weights, from light-weight to heavier-weight.

## Claims

1. An energy-absorbing steering column assembly for a vehicle having steerable road wheels, in which a pair of telescopically related mast jacket tubes (30 and 32) have a plurality of balls (40 and 42) adapted to roll between the walls of the tubes during relative telescopic movement of the tubes and thereby plastically form grooves in the walls of the tubes in a first stage of energy absorption, characterised in that in the first stage of energy absorption there is effective metal working of the mast jacket tubes (30 and 32) by all of the balls (40 and 42) for absorbing energy, that subsequent to predetermined telescopic travel of the steering column first ramp means (46) formed in one (30) of the mast jacket tubes (30 and 32) is operatively engaged by a predetermined first complement (40) of the balls (40 and 42) to provide a second stage of energy absorption with increased energy-absorbing capacity of the column, and that second ramp means (48) formed in the other (32) of the mast jacket tubes (30 and 32) is subsequently operatively engageable by a second complement (42) of the balls (40 and 42) to further progressively increase the rate of energy absorption in a third stage of energy absorption as the mast jacket tubes (30 and 32) move towards a maximum-telescoping position.

2. An energy-absorbing steering column assembly according to claim 1, characterised in that the balls (40 and 42) form part of a deforming ball unit (34) which is operatively mounted radially between the mast jacket tubes (30 and 32), the ball unit (34) comprising a sleeve (36) of plastics material having first (30) and second (32) complements of balls therein which are disposed in annular arrangements adjacent the ends of the sleeve (36) and are adapted to roll predetermined paths in the mast jacket tubes (30 and 32) in a first stage of energy absorption upon the application of a predetermined load to telescopically collapse the tubes (30 and 32).

3. An energy-absorbing steering column assembly according to claim 2, characterised in that in the second stage of energy absorption the first complement of balls (40) operatively engages the first ramp means (46) and one (32) of the mast jacket tubes (30 and 32) to provide a progressive increase in the energy-absorbing capacity of the column.

4. An energy-absorbing steering column assembly according to claim 2, characterised in that the mast jacket tubes (30 and 32) comprise metallic tubes, and that the deforming ball unit (34) comprises a cylindrical sleeve (36) of plastics material having the first and second complements of metal balls (40 and 42) disposed therein in annular arrangements adjacent opposite ends of the sleeve (36) and adapted to roll predetermined paths in walls of the mast jacket tubes (30 and 32) to effect the energy absorption.

5. An energy-absorbing steering column according to claim 3, characterised in that the first and second ramp means (46 and 48) comprise respective series of ramp means disposed internally of the respective mast jacket tubes (30 and 32).

## Patentansprüche

1. Energieabsorbierende Lenksäulenanordnung für ein Fahrzeug mit lenkbaren Straßenrädern, bei der zwei Säulenmantelrohre (30 und 32) in Teleskop-Beziehung eine Vielzahl von Kugeln (40 und 42) besitzen, die bei Teleskop-Relativbewegung der Rohre zum Abrollen zwischen den Wänden der Rohre ausgelegt sind und dadurch plastisch Nuten in den Wänden der Rohre in einer ersten Stufe der Energieaufnahme ausbilden, dadurch gekennzeichnet, daß in der ersten Stufe der Energieabsorption eine wirksame Metallbearbeitung der Säulen-Mantelrohre (30 und 32), durch alle Kugeln (40 und 42) zur Energieabsorption erfolgt, daß nach einem vorbestimmten Teleskopweg der Lenksäule erste, in einem (30) der Säulenmantelrohre (30 und 32) ausgebildete Rampenmittel (46) wirksam mit einem vorbestimmten ersten Satz (40) der Kugeln (40 und 42) in Eingriff kommen, um eine zweite Stufe der Energieabsorption mit erhöhter Energie-Absorbierungskapazität der Säule zu schaffen, und daß an dem anderen (32) der Säulenmantelrohre (30 und 32) ausgebildete Rampenmittel (48) nachfolgend durch einen zweiten Satz (42) der Kugeln (40 und 42) wirksam in Eingriff bringbar sind, um weiter progressiv die Energieabsorptionsrate in einer dritten Energieabsorptionsstufe zu erhöhen, während sich die Säulenmantelrohre (30 und 32) zu der maximalen Einfahrstellung hin gewegen.

2. Energieabsorbierende Lenksäulenanordnung nach Anspruch 1, dadurch gekennzeichnet, daß, die Kugeln (40 und 42) einen Teil einer Verformungs-Kugel-Einheit (34) bilden, die wirksam in Radialrichtung zwischen den Säulen-Mantelrohren (30 und 32) angebracht ist, wobei die Kugeleinheit (34) eine Hülse (36) aus Kunststoff-Material mit ersten (30) und zweiten (32) Kugelsätzen darin umfaßt, welche in ringförmiger Auslegung den Enden der Hülse (36) benachbart angeordnet und zum Rollen vorbestimmter Wege in den Säulen-Mantelrohren (30 und 32) in einer ersten Energieabsorptionsstufe auf Belastung mit einer vorbestimmten Last ausgelegt sind, um die Rohre (30 und 32) teleskopisch zusammenschieben zu lassen.

3. Energieabsorbierende Lenksäulenanordnung nach Anspruch 2, dadurch gekennzeichnet, daß in der zweiten Energieabsorptionsstufe der erste Kugelsatz (40) wirksam mit den ersten Rampenmitteln (46) an einem (32) der Säulen-Mantelrohre (30 und 32) in Eingriff kommt, um ein progressives Erhöhen der Energieabsorptionkapazität der Säule zu schaffen.

4. Energieabsorbierende Lenksäulenanordnung nach Anspruch 2, dadurch gekennzeichnet, daß die Säulen-Mantelrohre (30 und 32) Metallrohre umfassen, und daß die verformende Kugeleinheit (34) eine zylindrische Hülse (36) aus Kunststoff-Material umfaßt, in der die ersten und zweiten Metallkugelsätze (40 und 42) in ringförmigen Anordnungen den entgegengesetzt liegenden Enden der Hülse (36) benachbart angeordnet und zum Rollen nach vorbestimmten Wegen in den Wänden der Säulen-Mantelrhore (30 und 32) ausgelegt sind, um die Energieabsorption zu bewirken.

5. Energieabsorbierende Lenksäule nach Anspruch 3, dadurch gekennzeichnet, daß die ersten und die zweiten Rampenmittel (46 und 48) jeweilige Reihen von im Inneren der jeweiligen Säulen-Mantelrohre (30 und 32) angeordneter Rampenmitteln umfassen.

## Revendications

1. Colonne de direction à absorption d'énergie pour un véhicule ayant des roues directrices, dans laquelle une paire de tubes-enveloppes de colonne télescopique (30 et 32) présente un ensemble de billes (40 et 42) adaptées à rouler entre les parois des tubes au cours d'un mouvement télescopique relatif de ces tubes et à former ainsi de manière plastique des gorges dans les parois des tubes dans un premier stade d'absorption d'énergie, caractérisée en ce que, dans ce premier stade d'absorption d'énergie, il existe un travail effectif du métal des tubes-enveloppes de colonne (30 et 32) par l'ensemble des billes (40 et 42) en vue d'absorber de l'énergie, en ce qu'à la suite d'un parcours d'emboîtement d'amplitude déterminée de la colonne de direction, les premières rampes (46) ménagées sur l'un (30) des tubes-enveloppes de colonne (30 et 32) entrent en contact actif avec une première série prédéterminée (40) de l'ensemble de billes (40 et 42) afin de fournir un second stade d'absorption d'énergie avec une capacité accrue à l'absorption d'énergie de la colonne, et en ce que de secondes rampes (48) ménagées sur l'autre (32) des tubes-enveloppes de colonne (30 et 32) peuvent par la suite entrer en contact actif avec une seconde série (42) de l'ensemble de billes (40 et 42) afin d'accroître encore de manière progressive la capacité d'absorption d'énergie dans un troisième stade d'absorption d'énergie, tandis que les tubes-enveloppes de colonne (30 et 32) se déplacent en direction d'une position d'enchaînement maximal.

2. Colonne de direction à absorption d'énergie selon la revendication 1, caractérisée en ce que les billes (40 et 42) font partie d'un ensemble à billes de déformation (34) qui est monté en contact actif, dans le sens radial, entre les tubes-enveloppes de colonne (30 et 32) l'ensemble à bille (34) comprenant un manchon (36) de matière plastique présentant des première (30) et seconde (32) séries de billes qui sont disposées suivant des agencements annulaires adjacents aux extrémités du manchon (36) et sont adaptées à laminer des tracés prédéterminés dans les tubes enveloppes de colonne (30 et 32) dans un premier stade d'absorption d'énergie lors de l'application d'un effort prédéterminé afin d'écraser de manière télescopique les tubes (30 et 32).

3. Colonne de direction à absorption d'énergie selon la revendication 2, caractérisée en ce que, dans le second stade d'absorption d'énergie, la première série de billes (40) vient en contact actif avec les premières rampes (46) et l'un (32) des tubes-enveloppes de colonne (30 et 32) afin d'accroître progressivement la capacité d'absorption d'énergie de la colonne.

4. Colonne de direction à absorption d'énergie selon la revendication 2, caractérisée en ce que les tubes-enveloppes de colonne (30 et 32) sont constitués par des tubes métalliques et en ce que l'ensemble à billes de déformation (34) comprend un manchon cylindrique (39) en matière plastique comportant les première et seconde séries de billes métalliques (40 et 42) qui y sont disposés suivant des agencements annulaires adjacents aux extrémités opposées du manchon (36) et sont adaptés à laminer des tracés prédéterminés dans des parois des tubes-enveloppes de colonne (30 et 32) afin d'effectuer l'absorption d'énergie.

5. Colonne de direction à absorption d'énergie selon la revendication 3, caractérisée en ce que les premières et secondes rampes (46 et 48) comprennent des séries respectives de rampes disposées intérieurement aux tubes-enveloppes respectifs de colonne (30 et 32).

Fig.1

Fig.3

Fig.2

Fig.4

E/A FROM COINED
LOWER JACKET

E/A FROM COINED
UPPER JACKET

E/A FROM BALL
SLEEVE

POUNDS

INCHES